# DEMANDE DE BREVET EUROPEEN

(11) **EP 0 605 314 A1**
(43) Date de publication de la demande: **06.07.1994**
(21) Numéro de dépôt: 93403180.8
(22) Date de dépôt: 27.12.1993
(51) Int. Cl.: G03B 27/20

(54) **Dispositif pour la reproduction d'images sur un film photosensible à partir d'un original transparent, notamment d'un négatif photographique ou d'une diapositive**

(30) Priorité: 28.12.1992 FR 9215794
(71) Demandeur: Visage, Albert, F-45220 Chateaurenard (FR)
(72) Inventeur: Visage, Albert, F-45220 Chateaurenard (FR)
(74) Mandataire: Lemoine, Robert

(57) **Abrégé**

Le dispositif conforme à l'invention comprend un châssis (3) comportant une surface de travail (6) destinée à supporter le film photosensible (1); un plateau (11) relié au châssis par un axe d'articulation (19) et comportant une ouverture centrale (18); une plaque amovible (20) immobilisable contre la face inférieure (13) du plateau (11) et comportant une fenêtre (21) destinée à être obturée par un original (2) ; un joint d'étanchéité annulaire (36) installé sur le châssis (3), autour de la surface de travail (6); une chambre délimitée par le joint d'étanchéité (36), ainsi que par la surface de travail (6) et la plaque amovible (20) lorsque le plateau (11) applique celle-ci contre le châssis ; des moyens de mise sous vide pour créer une dépression dans la chambre ; et une source lumineuse pour impressionner le film à travers l'original.

## Description

La présente invention concerne un dispositif pour la reproduction d'images sur un film photosensible à partir d'un original transparent, notamment d'un négatif photographique ou d'une diapositive.

Les dispositifs de reproduction d'images que l'on trouve actuellement sur le marché ont une structure complexe, ce qui rend leur fabrication difficile et coûteuse. En fait, la complexité de ces dispositifs résulte principalement des difficultés auxquelles sont confrontés les constructeurs pour assurer un contact intime entre le film photosensible et l'original et éviter entre ces derniers la présence de bulles d'air qui risqueraient d'altérer la qualité des images obtenues.

La présente invention se propose de remédier plus particulièrement à ces inconvénients et, pour ce faire, elle a pour objet un dispositif de reproduction d'images qui se caractérise en ce qu'il comprend un châssis comportant une surface de travail destinée à supporter le film photosensible; un plateau relié au châssis par un axe d'articulation et comportant une face supérieure, une face inférieure, un premier côté adjacent à l'axe d'articulation ; un second côté parallèle au premier côté et une ouverture centrale ; une plaque amovible immobilisable contre la face inférieure du plateau et comportant une fenêtre destinée à être obturée par un original, cette fenêtre étant située devant l'ouverture centrale lorsque la plaque est en place sur le plateau ; un joint d'étanchéité annulaire installé sur le châssis de façon à faire face à la partie de la plaque amovible qui est à l'extérieur de l'ouverture centrale ; une chambre délimitée par le joint d'étanchéité ainsi que par la surface de travail du châssis et par la plaque amovible portant l'original, lorsque le plateau applique ladite plaque contre le châssis ; des moyens de mise sous vide pour créer une dépression dans la chambre ; et une source lumineuse dirigée vers l'ouverture centrale du plateau pour impressionner le film à travers l'original.

Le dispositif de reproduction conforme à l'invention a une structure très simple et peut être construit avec un prix de revient très compétitif. Il est en outre très facile à utiliser.

De préférence, la face de la plaque amovible qui est destinée à recevoir l'original comporte, le long de la périphérie de la fenêtre, un cordon adhésif à pouvoir adhérent permanent.

La fixation d'un original à la périphérie de la fenêtre de la plaque amovible peut ainsi être réalisée rapidement et de façon sûre. L'enlèvement de l'original est en outre aisé, l'adhésif autorisant cet enlèvement en raison de son pouvoir adhérent permanent qui l'empêche d'assurer une liaison définitive.

Avantageusement, le plateau comporte des moyens pour retenir la plaque amovible contre sa face inférieure.

Les risques pour que la plaque amovible puisse se déplacer par rapport au plateau ou au châssis pendant l'utilisation du dispositif de reproduction sont ainsi éliminés.

Selon un mode de réalisation particulier, les moyens de retenue comprennent une barrette parallèle et adjacente au premier côté du plateau, cette barrette étant déplaçable le long d'au moins deux tiges pourvues d'une protubérance à leur extrémité libre et fixées sur la face inférieure du plateau, ainsi que des organes élastiques entourant les tiges le long de leur partie comprise entre leur protubérance et la barrette.

Ces moyens de retenue permettent d'immobiliser rapidement la plaque amovible par rapport au plateau. Il suffit en effet d'insérer l'un des côtés de la plaque sous la barrette pour que celle-ci, en coopération avec les organes élastiques, le retienne contre le plateau.

Lorsque la plaque amovible a des côtés dont la longueur est supérieure à la distance séparant les tiges, il est souhaitable qu'elle comporte des encoches latérales destinées à livrer passage auxdites tiges lors de son introduction entre la barrette et le plateau.

Ces encoches permettent en effet d'introduire davantage la plaque sous la barrette et d'améliorer sa retenue contre le plateau.

De préférence, les moyens de retenue comprennent également une gouttière ayant un fond recouvrant le second côté du plateau et deux ailes s'avançant sur les faces supérieure et inférieure de celui-ci, cette gouttière étant déplaçable le long d'au moins deux tiges pourvues d'une protubérance à leur extrémité libre et fixées sur le second côté du plateau, ainsi que des organes élastiques entourant les tiges le long de leur partie comprise entre leur protubérance et le fond de la gouttière.

Grâce à ces autres moyens de retenue, la plaque peut être immobilisée de façon plus sûre contre le plateau, ce qui contribue à améliorer encore la qualité des images obtenues.

Afin de réaliser plus facilement la mise en dépression de la chambre, il est souhaitable que la surface de travail du châssis comporte une rainure longeant intérieurement le joint d'étanchéité et dans laquelle débouche au moins un conduit relié aux moyens de mise sous vide.

Par ailleurs, pour permettre un positionnement précis du film photosensible sur la surface de travail lors de l'utilisation en chambre noire du dispositif de reproduction, le châssis comporte avantageusement au moins deux séries de tétons disposées perpendiculairement l'une par rapport à l'autre, ces tétons étant aptes à s'escamoter sous l'action de la plaque amovible lorsque celle-ci est appliquée contre la surface de travail.

Un mode d'exécution de la présente invention sera décrit ci-après à titre d'exemple nullement limitatif en référence aux dessins annexés dans lesquels :
- la figure 1 est une vue en perspective schématique d'un dispositif de reproduction conforme à l'invention, ce dispositif étant représenté avec deux plaques amovibles différentes ;
- la figure 2 est une vue en coupe schématique du dispositif visible sur la figure 1, le plateau étant représenté dans une position inclinée par rapport au châssis ; et
- la figue 3 est une vue analogue à la figure 2, mais montrant le plateau dans une position parallèle à la surface de travail du châssis.

Le dispositif représenté sur les dessins a été mis au point pour reproduire des images, par contact, sur un film photosensible 1 à partir d'un original transparent 2 tel qu'un négatif photographique ou une diapositive.

Il comprend un châssis 3 comportant une face inférieure 4, une face supérieure 5 sur laquelle est ménagée une surface de travail horizontale 6, deux côtés longitudinaux 7,8 et deux côtés transversaux 9,10.

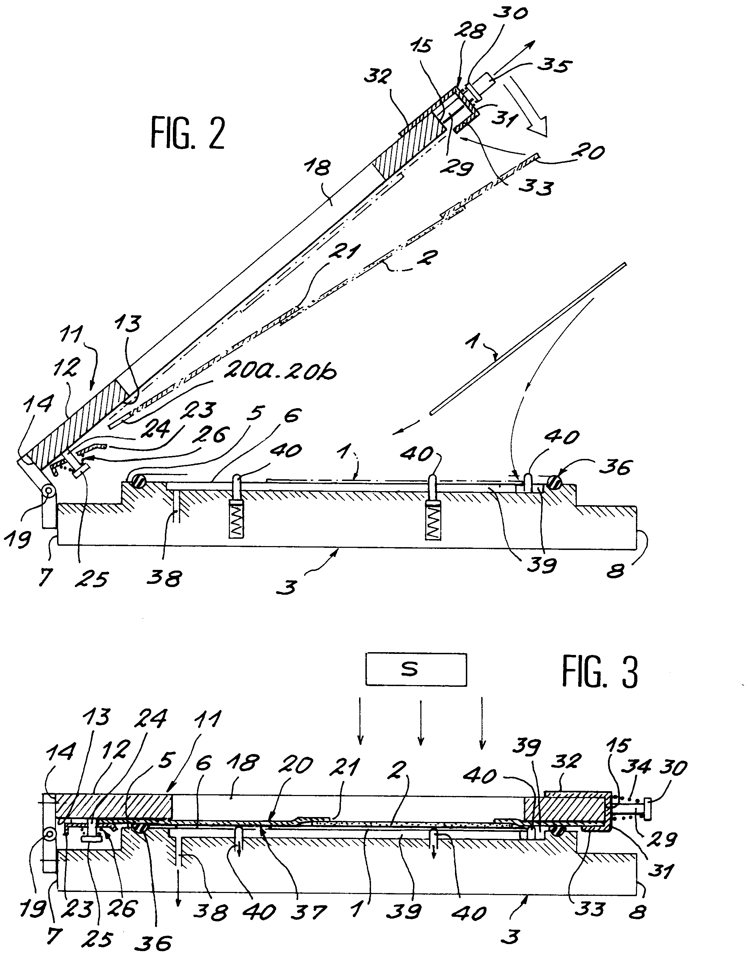

Il comprend également un plateau 11 comportant une face supérieure 12, une face inférieure 13, deux côtés longitudinaux 14,15, deux côtés transversaux 16,17 et une ouverture centrale 18. Le plateau 11 est articulé sur le châssis 3 autour d'un axe d'articulation horizontal 19. Celui-ci est parallèle et adjacent au côté longitudinal 7 du châssis ainsi qu'au côté longitudinal 14 du plateau, de sorte que ce dernier peut pivoter entre une position inclinée dans laquelle sa face inférieure 13 est inclinée par rapport à la surface de travail 6, comme représenté sur la figure 2, et une position horizontale dans laquelle sa face inférieure est parallèle à la surface de travail 6, comme représenté sur la figure 3.

Le dispositif de reproduction comprend par ailleurs une plaque rectangulaire 20 amovible, immobilisable contre la face inférieure 13 du plateau 11 et comportant une fenêtre 21 dont les dimensions sont légèrement inférieures à celles de l'original 2 à reproduire, la fenêtre 21 étant réalisée à un emplacement tel qu'elle se trouve devant l'ouverture centrale 18 du plateau 11 lorsque la plaque est en place contre ce dernier.

On notera ici que la face de la plaque 20 qui est destinée à recevoir l'original 2 comporte, le long de la périphérie de la fenêtre 21, un cordon d'adhésif 22 ayant un pouvoir adhérent permanent, c'est-à-dire ayant la particularité de ne pas assurer une liaison définitive.

Grâce au cordon d'adhésif 22, l'original 2 peut donc être rapidement fixé devant la fenêtre 21 de la plaque, ou en être enlevé tout aussi rapidement.

Afin de permettre l'immobilisation de la plaque 20 contre la face inférieure 13 du plateau 11, celui-ci comporte une barrette 23 déplaçable le long de deux tiges 24 pourvues d'une protubérance 25 à leur extrémité libre et fixées sur la face inférieure 13, la barrette 23 étant parallèle et adjacente au côté longitudinal 14 du plateau tandis que deux ressorts hélicoïdaux 26 entourent les tiges 24, entre leur protubérance 25 et la barrette 23, et sollicitent cette dernière contre le plateau.

Etant donné que la plaque 20 a une longueur supérieure à la distance des tiges 24, son côté longitudinal destiné à être inséré entre la barrette 23 et la face inférieure 13 du plateau comporte deux encoches 20a,20b destinées à livrer passage aux tiges 24.

On conçoit aisément que les encoches 20a,20b permettent d'insérer la plaque 20 sur une plus grande distance sous la barrette 23 et de mieux l'immobiliser contre la face inférieure 13 du plateau.

En se référant plus particulièrement aux figures 2 et 3, on remarquera que le côté longitudinal de la barrette 23 qui est tourné vers le côté longitudinal 15 du plateau est incurvé en direction du châssis 3. Cette disposition a bien entendu l'avantage de faciliter l'insertion de la plaque 20 sous la barrette, à l'encontre de l'action des ressorts 26.

Le plateau 13 comporte par ailleurs une gouttière 28 déplaçable le long de deux tiges 29 pourvues d'une protubérance 30 à leur extrémité libre et fixées sur le côté longitudinal 15 du plateau, la gouttière 28 ayant un fond 31 recouvrant le côté longitudinal 15 et deux ailes 32,33 s'avançant sur les faces supérieure 12 et inférieure 13 du plateau, tandis que deux ressorts hélicoïdaux 34 entourent les tiges 29, entre leur protubérance 30 et le fond 31 de la gouttière et sollicitent ce dernier contre le côté longitudinal 15 du plateau.

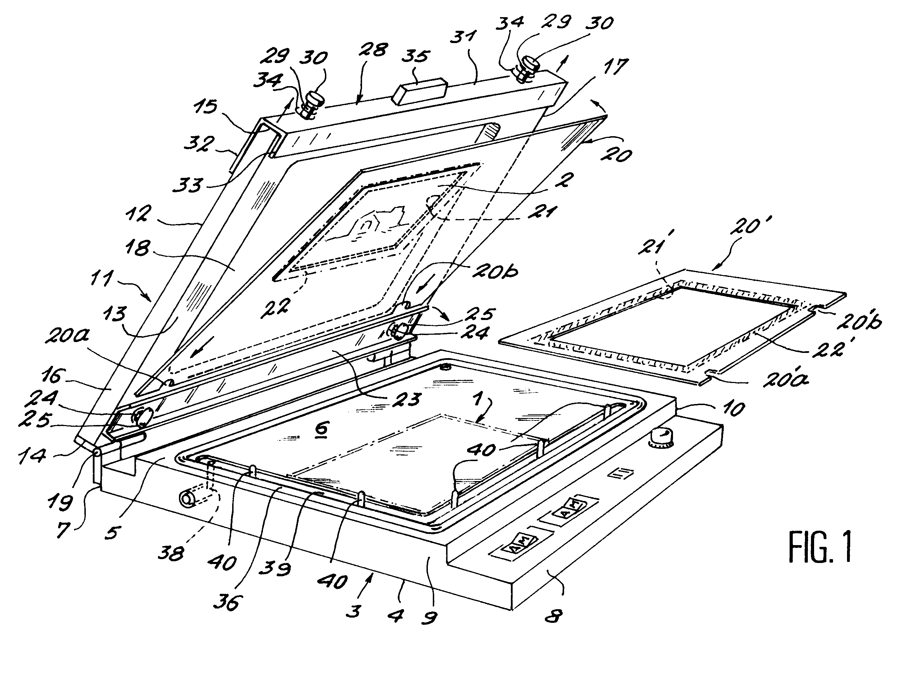

Comme le montre clairement la figure 1, la gouttière 28 comporte un organe de préhension 35 faisant saillie sur son fond et grâce auquel l'utilisateur peut la déplacer le long des tiges 29, à l'encontre de l'action des ressorts, comme représenté sur la figure 2.

Lorsque la plaque 20 est appliquée contre la face inférieure 13 du plateau 11, alors que son côté longitudinal comportant les encoches 20a,20b est inséré sous la barrette 23, son autre côté longitudinal s'étend sensiblement en-deçà du côté longitudinal 15 du plateau 1.

Il suffit donc d'exercer une traction sur l'organe de préhension 35 de la gouttière 28 pour appliquer l'autre côté longitudinal de la plaque 20 contre le plateau, et de laisser revenir la gouttière 28 dans sa position d'origine pour que son aile 33 s'avance au-dessus dudit autre côté longitudinal et le retienne.

En revenant maintenant au châssis 3, on précisera qu'il comporte sur sa face supérieure 5 un joint d'étanchéité 36 entourant la surface de travail 6. Ce joint d'étanchéité, qui a une forme rectangulaire, est positionné de telle sorte que lorsque la plaque 20 est immobilisée contre le plateau 11, et que celui-ci s'étend parallèlement au châssis 3, la partie de la plaque 20 qui entoure l'ouverture 18 vient s'appuyer contre lui, comme représenté sur la figure 3.

Lorsque le plateau 11 s'étend parallèlement au châssis 3, le joint d'étanchéité 36 délimite, avec la surface de travail 6 et la plaque amovible 20 portant l'original 2, une chambre 37 reliée par un conduit 38 à une source à vide non représentée.

Il est possible ainsi de créer une dépression dans la chambre 37 afin d'éliminer les bulles d'air qui pourraient être présentes entre le film 1 et l'original 2 et perturber la qualité de l'image obtenue.

Dans l'exemple représenté, le conduit 38 débouche dans une rainure 39 longeant intérieurement deux côtés adjacents du joint d'étanchéité 36, cette rainure permettant une uniformisation rapide de la dépression créée dans la chambre 37.

On précisera enfin que des tétons 40 sont répartis le long des deux tronçons de la rainure 39 et font légèrement saillie hors de celle-ci. Ils sont disposés le long des deux côtés de la surface de travail 6 qui longent la rainure, et sont aptes à s'escamoter sous l'action de la plaque 20 lorsque le plateau 11 s'étend parallèlement au châssis.

Leur présence a été prévue pour permettre à l'utilisateur de placer convenablement le film 1 sur la surface de travail 6 lorsqu'il travaille en chambre noire.

La position du film 1 telle qu'elle est définie par les tétons 40 correspond bien entendu à la position de la fenêtre 21 de la plaque 20 lorsque celle-ci est en place contre la face inférieure 13 du plateau 11.

Pour être complet, on indiquera que le dispositif de reproduction conforme à l'invention comporte une source lumineuse S, représentée schématiquement sur la figure 3, cette source étant destinée à éclairer l'ouverture centrale 18 du plateau 11, afin d'impressionner le film 1 à travers l'original 2.

On rappellera à toutes fins utiles que ce dispositif doit être utilisé en chambre noire afin d'éviter la surexposition du film 1 sous l'action de la lumière naturelle ou d'une lumière artificielle.

Le dispositif de reproduction conforme à l'invention est très facile à utiliser. Pour reproduire sur un film 1 une image formée sur l'original 2, on peut en effet procéder comme suite.

Tout d'abord, on applique la périphérie de l'original 2 contre le cordon d'adhésif 22 prévu autour de la fenêtre 21 de la plaque 20. Cette première opération permet donc de fixer l'original 2 sur la plaque 20, de telle sorte qu'il obture la fenêtre 21 de celle-ci.

On introduit ensuite le côté longitudinal de la plaque 20 qui porte les encoches 20a,20b, sous la barrette 23, jusqu'à ce que les tiges 24 viennent en butée contre le fond desdites encoches.

On exerce maintenant une traction sur l'organe de préhension 35 de la gouttière 28, comme représenté sur la figure 2, après quoi on applique la plaque 20 contre la face inférieure 13 du plateau, après quoi on libère l'organe de préhension 35 pour que l'aile 33 de la gouttière 28 vienne coiffer l'autre côté longitudinal de la plaque 20. Celle-ci est donc en place contre la face inférieure 13 du plateau 11, l'original 2 se trouvant bien entendu devant l'ouverture centrale 18 de ce dernier.

On place ensuite le film 1 sur la surface de travail 6 du châssis en utilisant les tétons 40 comme moyens de guidage. Puis l'on fait pivoter le plateau 11 jusqu'à ce que la plaque 20 vienne s'appuyer contre le joint d'étanchéité 36, et on le verrouille d'une manière connue en soi dans cette position.

On relie maintenant à une source de vide la chambre 37 qui est délimitée par le joint 36 ainsi que par la plaque 20 portant l'original 2 et par la surface de travail 6, de façon à créer une dépression dans cette chambre et d'éviter ainsi que des bulles d'air soient présentes entre le film 1 et l'original 2.

Lorsque la dépression créée dans la chambre est suffisante, on expose le film 1 en éclairant pendant une durée déterminée l'original 2 à l'aide, de la source lumineuse S, à travers l'ouverture centrale 18 du plateau 11.

On rétablit ensuite la pression atmosphérique dans la chambre 37, après quoi on fait pivoter le plateau 11 pour dégager la surface de travail 6 du châssis, après quoi on récupère le film exposé.

On peut bien entendu conserver l'original 2 pour reproduire l'image qu'il porte sur un nouveau film. Mais on peut également le remplacer par un original de mêmes dimensions.

On peut également utiliser le dispositif conforme à l'invention pour reproduire des images de plus grandes dimensions sur des films de dimensions correspondantes. Il suffit en effet de remplacer la plaque 20 par la plaque 20', représentée sur la figure 1, qui comporte une fenêtre 21', un cordon d'adhésif 22' à pouvoir adhérent permanent et des encoches 20'a,20'b dont la distance est la même que celle des encoches 20a,20b.

Pour être complet, on précisera que dans le dispositif de reproduction conforme à l'invention, l'original 2 obture la fenêtre 21 de la plaque amovible 20, en l'absence de toute plaque de verre. Les risques pour que des poussières et des bulles d'air s'accumulent entre l'original et une plaque de verre, comme dans le cas des dispositifs de reproduction actuels, sont donc totalement éliminés, ce qui évite la formation de défauts sur les reproductions obtenues, ainsi que les opérations de nettoyage longues et fastidieuses qui étaient jusqu'ici nécessaires après chaque manipulation.

## Revendications

1. Dispositif pour la reproduction d'images sur un film photosensible (1) à partir d'un original transparent (2), notamment d'un négatif photographique ou d'une diapositive, caractérisé en ce qu'il comprend un châssis (3) comportant une surface de travail (6) destinée à supporter le film photosensible (1); un plateau (11) relié au châssis par un axe d'articulation (19) et comportant une face supérieure (12), une face inférieure (13), un premier côté (14) adjacent à l'axe d'articulation (19), un second côté (15) parallèle au premier côté et une ouverture centrale (18) ; une plaque amovible (20) immobilisable contre la face inférieure (13) du plateau (11) et comportant une fenêtre (21) destinée à être obturée par un original (2), cette fenêtre étant située devant l'ouverture centrale (18) lorsque la plaque (20) est en place sur le plateau ; un joint d'étanchéité annulaire (36) installé sur le châssis (3) de façon à faire face à la partie de la plaque amovible (20) qui est à l'extérieur de l'ouverture centrale (18) ; une chambre (37) délimitée par le joint d'étanchéité (36) ainsi que par la surface de travail (6) du châssis (3) et par la plaque amovible (20) portant l'original (2), lorsque le plateau (11) applique ladite plaque contre le châssis ; des moyens de mise sous vide pour créer une dépression dans la chambre (37); et une source lumineuse (S) dirigée vers l'ouverture centrale (18) du plateau pour impressionner le film (1) à travers l'original (2).

2. Dispositif selon la revendication 1, caractérisé en ce que la face de la plaque amovible (20) qui est destinée à recevoir l'original (2) comporte, le long de la périphérie de la fenêtre (21), un cordon adhésif (22) à pouvoir adhérent permanent.

3. Dispositif selon la revendication 1 ou 2, caractérisé en ce que le plateau (11) comporte des moyens pour retenir la plaque amovible (20) contre sa face inférieure (13).

4. Dispositif selon la revendication 3, caractérisé en ce que les moyens de retenue comprennent une barrette (23) parallèle et adjacente au premier côté (14) du plateau (11), cette barrette étant déplaçable le long d'au moins deux tiges (24) pourvues d'une protubérance (25) à leur extrémité libre et fixées sur la face inférieure (13) du plateau, ainsi que des organes élastiques (26) entourant les tiges (24) le long de leur partie comprise entre leur protubérance (25) et la barrette (23).

5. Dispositif selon la revendication 4, caractérisé en ce que la plaque amovible (20) comporte des encoches latérales (20a,20b) destinées à livrer passage aux tiges (24) lors de son introduction entre la barrette (23) et le plateau (11).

6. Dispositif selon la revendication 5, caractérisé en ce que les moyens de retenue comprennent également une gouttière (28) ayant un fond (31) recouvrant le second côté (15) du plateau (11) et deux ailes (32,33) s'avançant sur les faces supérieure (12) et inférieure (13) de celui-ci, cette gouttière étant déplaçable le long d'au moins deux tiges (29) pourvues d'une protubérance (30) à leur extrémité libre et fixées sur le second côté (15) du plateau, ainsi que des organes élastiques (34) entourant les tiges (29) le long de leur partie comprise entre leur protubérance (30) et le fond (31) de la gouttière (28).

7. Dispositif selon la revendication 1, caractérisé en ce que la surface de travail (6) du châssis (3) comporte une rainure (39) longeant intérieurement le joint d'étanchéité (36) et dans laquelle débouche au moins un conduit (38) relié aux moyens de mise sous vide.

8. Dispositif selon la revendication 1, caractérisé en ce que le châssis (3) comporte au moins deux séries de tétons (40) disposées perpendiculairement l'une par rapport à l'autre, ces tétons étant aptes à s'escamoter sous l'action de la plaque amovible (20) lorsque celle-ci est appliquée contre la surface de travail (6).
